# EUROPEAN PATENT APPLICATION

(11) **EP 2 955 929 A1**
(43) Date of publication of application: **16.12.2015**
(21) Application number: 14748879.5
(22) Date of filing: 24.01.2014
(51) Int. Cl.: H04N 21/472

(54) **INTEGRATED USER INTERFACE FOR ACCESS TO LINEAR AND NON-LINEAR MULTIMEDIA CONTENT FROM MULTIPLE SOURCES, AND METHOD FOR IMPLEMENTING THE SAME**

(30) Priority: 08.02.2013 BR 102013003187
(71) Applicant: TQTVD Software Ltda, 20011-000 Rio de Janeiro - RJ (BR)
(72) Inventor: GOMES, Marcelo Amaral, CEP: 20240-050 Rio de Janeiro - RJ (BR); DOS SANTOS, Hélder Ribeiro, CEP: 24220-121 Niterói - RJ (BR); PERRONE, Hernan Rafael, CEP: 20510-260 Rio de Janeiro - RJ (BR); DE BRITTO, David Estevam, CEP: 24346-040 Niterói - RJ (BR)
(74) Representative: Lenthall, Joseph
(86) International application number: PCT/BR2014/000033
(87) International publication number: WO 2014/121360

(57) **Abstract**

The present invention relates to a user interface for integrated access to linear multimedia content such as, for example, digital TV channels transmitted by land, satellite or cable TV broadcasters, *"multi-cast"* or live streams transmitted by data networks or over the Internet, as well as on demand or non-linear multimedia content, such as, for example, contents of Internet services and/or multimedia applications in a digital TV reception apparatus having support for playback of such multimedia content, allowing the user to navigate through linear and non-linear content in a single list and in a transparent manner, in such a way as to present non-linear content as if such content were also TV channels. The user interface according to the present invention comprises a digitally readable medium comprising lines of program code and means for running such lines of program code in order to implement integrated access to linear and non-linear multimedia content originating from multiple sources in a digital TV reception apparatus.

## Description

### Field of the Invention

The present invention relates to a user interface for integrated access to linear multimedia content such as, for example, digital TV channels transmitted by land, satellite or cable TV broadcasters, *"multi-cast"* or live streams transmitted by data networks or over the Internet, as well as on demand or non-linear multimedia content, such as, for example, contents of Internet services and/or multimedia applications in a digital TV reception apparatus having support for playback of such multimedia content. In particular, the interface of the present invention allows the user to navigate through linear and non-linear multimedia content originating from multiple sources in a single list and in a transparent manner, so as to present non-linear content as if such content were also from TV channels. In this way, user access to multimedia content offered by various services and providers of Internet content is feasible.

### Background of the Invention

A digital TV reception apparatus is a device capable of receiving and decoding digital signals sent by various TV broadcasters for presentation on a monitor. Such apparatus may be fixed (integrated to the TV set or not), portable or mobile. Currently such devices already allow the playback of non-linear multimedia content loaded from an Internet connection, but the consumption of such content is done through applications, which may be factory-installed in the digital TV reception apparatus, subsequently installed by the user or even transmitted by the digital TV signal.

In the currently available model of digital TV reception apparatuses, the user must leave the interaction environment with the traditional (linear multimedia content) TV channels and access another interaction environment to be able to access the non-linear multimedia content coming from the Internet. However, this operation tends to create a barrier to access to such non-linear content, since it favors the consumption of linear content from traditional digital TV channels while hinders the consumption of non-linear content from Internet channels.

With this problem in mind, document WO1998056188, in an attempt to resolve it, discloses a system of client and server that provides an integrated solution for TV with on demand content from the Internet. Specifically, this document describes a rotating menu that allows navigation between TV channels and Internet pages, as well as the means by which the content is downloaded to the apparatus via connection with a server. However, this system displays web pages on TV channels instead of only multimedia content, which would enable giving such content from the Internet the same aspect of content coming from the digital TV signal.

In this sense, the present invention provides a user interface that provides navigation through linear and non-linear multimedia content originating from multiple sources in a single list and in a transparent manner, so as to present non-linear content as if such content were also from TV channels.

### Description of the Invention

For the purposes of the present invention, in the description that will be made in the following, it should be considered that:
- the expression "digital TV reception apparatus" should be understood as any device having support for running digital files capable of receiving and decoding the digital TV signals sent by ground, satellite or cable TV broadcasters for presentation on a monitor. Such apparatus may be fixed (integrated to the TV set or not), portable or mobile;
- the expression "linear multimedia content" should be understood as comprising the content that progresses without any intervention or control on the part of the user. Examples of linear multimedia content include, however, without limiting, the TV signal and "online" videos when played in uninterrupted manner; and
- the expression "non-linear multimedia content" should be understood as comprising the content that, in order to progress, requires intervention or control on the part of the user, i.e., that demands interactivity. Examples of linear multimedia content include, without however limiting, hyperlinks, video games, online music and videos consumed on demand.

Thus, according to the present invention, it is provided an integrated user interface that allows access to linear and non-linear multimedia content originating from multiple sources in a single list and in a transparent manner, so as to present non-linear content as if such content were also from TV channels.

Said TV channels receive the same treatment of traditional TV channels, allowing the user to browse freely through linear and non-linear channels using the channel change keys of the common remote control, or the navigation arrows thereof. In the same way, non-linear content channels can be bookmarked by user for a quicker navigation, in the same way that it is possible to be done with the traditional TV channels.

The integrated user interface in accordance with the present invention also allows the various channels of Internet content to have a standardized interface between themselves, which will provide such channels with the appearance similar to a traditional TV channel, with continuous playback of Internet videos, but also by adding features that allow the consumption of on demand content, such as, for example, the selection of categories, search by keyword and display of videos related to the current one.

The integrated user interface in accordance with the present invention comprises a digitally readable medium comprising lines of program code, which is found stored in "read only" memory in the TV receiver and can be part of the TV receiver firmware, and means for running such lines of program code in order to implement integrated access to linear and non-linear multimedia content originating from multiple sources in a digital TV reception apparatus with support for the playback of such multimedia content, the means of running being present in the digital TV receiver and comprising a processor and RAM memory.

The integrated user interface in accordance with the present invention is structured in such a way as to provide the functions of, at least:
a) discovering and tuning into digital TV channels, in a manual and/or automatic way;
b) discovering and installing channels with content originating from the Internet, in a manual and/or automatic way.

Additionally, the integrated user interface in accordance with the present invention is structured in such a way as to provide the functions of, at least:
c) navigating through a single environment and/or list that aggregates digital TV channels and Internet channels using the keys *"channel up"* and *"channel down"* on the remote control, or the navigation arrows thereof, or any other type of mechanism used for changing the channel;
d) watching content from digital TV channels in a linear manner;
e) watching content from Internet channels in a linear (continuous) manner;
f) watching content from Internet channels in a non-linear (on demand) manner;

Optionally, the integrated user interface provides functions of:
g) bookmarking digital TV channels;
h) bookmarking channels with content from the Internet;

Additionally, the integrated user interface in accordance with the present invention is structured in such a way as to provide the functions of, at least:
i) searching by content in channels with content from the Internet;
j) filtering content through the choice of categories in channels with content from the Internet;
l) see content related to the video that is playing at the time in channels with content from the Internet;
m) remove digital TV channels when desired;
n) removing channels with content from the Internet when desired; or

Additionally, the integrated user interface in accordance with the present invention is structured in such a way as to provide all of the above-defined functions or combinations thereof.

The present invention also provides a method for implementing said user interface which comprises the steps of:
(I) providing a digitally readable medium comprising lines of program code, which is stored in "read only" memory in the TV receiver and can be part of the TV receiver firmware, and
(II) provide means for performing such lines of program code in order to implement integrated access to linear and non-linear multimedia content originating from multiple sources in a digital TV reception apparatus with support to the playback of such multimedia content, the means of running being present in the digital TV receiver and comprising a processor and RAM memory.

### Example of Embodiment

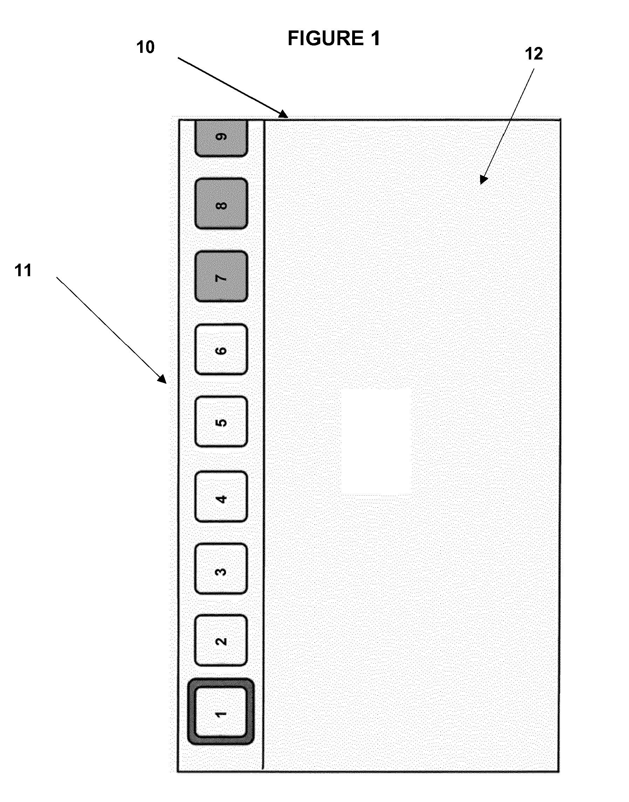

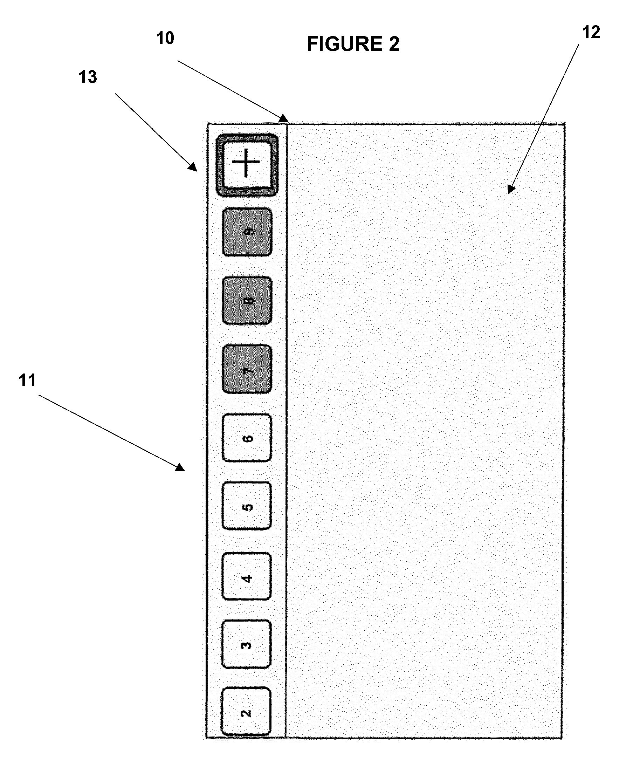

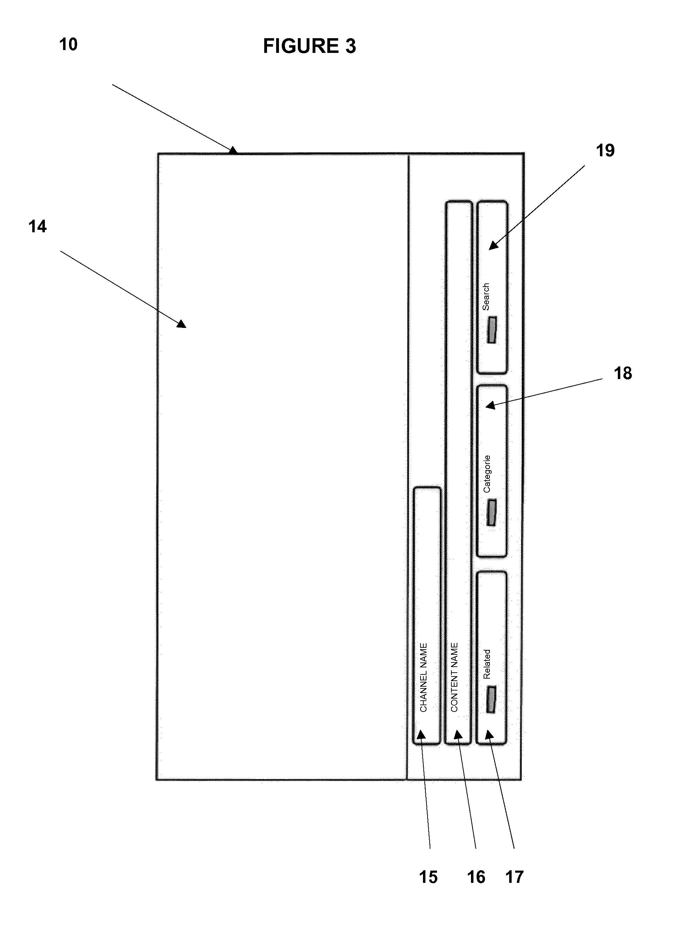

The following description will make additional reference to Figures 1, 2 and 3, which represent non-limiting schematic examples of the scope of the invention. Such examples represent some of the possible forms of presentation of the user interface according to the present invention in a digital TV reception apparatus.

The interface that integrates linear and non-linear multimedia content from multiple sources is shipped by the manufacturer in the memory of the digital TV receiver (10), being called by the user using the buttons on the remote control used to perform channel switching. Upon being called, this interface in the form of a list (11) appears over a background (12) that may be, however, without limiting, the video that is being played by a channel, a static or animated image file, or a video file embedded in receiver.

The primary function of the interface in the form of a list (11) is to streamline the access to different types of available channels, either TV channels tuned from the digital air signal or Internet channels installed from an Internet connection.

The icons that call these types of channels are viewed through the list (11), arranged on the TV screen (10) in a quick access area. First, icons are displayed which lead to the TV channels (1, 2, 3, 4, 5, 6) and then icons that lead to Internet channels (7, 8, 9). There is no maximum limit to the amount of icons of one type or the other that may be displayed in the list (11) as it is rotating, i.e., when you reach the end of the list, the next item will be the first one.

With the list (11) open, the user can change the channel using the remote control keys commonly used to perform channel switching or use the arrows on the remote control to move the focus of navigation through the menu up to the desired icon (1-9) and press the confirmation key "OK" on the remote control. The difference between the two types of navigation is that, when using the channel switching keys, the channel change is automatic, whereas when using the directional arrows, the channel switching occurs after the icon of a certain channel is selected during a given period of time or when you press the "OK" confirmation key on the remote control.

The last icon of this list will always be the "+ Channels" (13), which calls a setup screen that allows you to tune to new TV channels or install new Internet channels. If there are no TV channels tuned or Internet channels installed, only the icon "+ Channels" (13) will be displayed on the list (11).

When a TV channel icon (1-6) is selected, the channel is tuned. When pressing the "INFO" key on the remote control, information pertinent to the content are displayed, such as channel name, name of the show that is airing, age rating, synopsis, among other information.

When selecting the icon (7-9) of an Internet channel, an interface is displayed that makes the experience as closest as possible to that which the user has when watching a TV channel. The video will begin to be played in full screen (14) and, as soon as it finishes, another video is loaded subsequently and so on. When pressing the "INFO" button on the remote control, relevant information are displayed, such as name of the channel of the video that is airing in a video area (15) and content in a video area (16), the user still being able to access on demand content through the functions of access to related videos in a video area (17), selection of category in a video area (18) and search for content by keyword in a video area (19). All of these functions are accessed through the pressing of colored keys on the remote control.

As can be seen, the user interface in accordance with the present invention provides, in a digital TV reception apparatus, a single list integrating linear and non-linear channels, allowing the user to quickly navigate between content from TV channels and from Internet channels through a simple channel switching via remote control. The tuning of linear channels available in the region in which the digital TV reception apparatus is found and the installation of new non-linear channels can be quickly accessed via the same menu.

Thus, those versed in the art will appreciate that the user interface in accordance with the present invention provides integrated access to multimedia content from the Internet with the same aspect of the content coming from the Digital TV signal, i.e., with a seamless playback of videos in full screen from Internet content services, so as to facilitate and streamline the consumption of this content on the part of the user, giving the aspect of a multimedia content to a linear content that, in other apparatuses, can only be consumed in a non-linear manner. In addition, the user interface in accordance with the present invention also provides, optionally, consuming content from the Internet on demand in a non-linear manner, if so desired.

## Claims

1. An integrated user interface of access to linear and non-linear multimedia content originating from multiple sources, comprising a digitally readable medium comprising lines of program code, which is found stored in "read only" memory in the TV receiver and can be part of the TV receiver firmware, and means for running such lines of program code in order to implement integrated access to linear and non-linear multimedia content originating from multiple sources in a digital TV reception apparatus with support for the playback of such multimedia content, the means of running being present in the digital TV receiver and comprising a processor and RAM memory.

2. The integrated user interface of access to linear and non-linear multimedia content originating from multiple sources, according to claim 1, wherein it is structured in such a way as to provide the functions of at least: a) discovering and tuning into digital TV channels, in a manual and/or automatic way; b) discovering and installing channels with content originating from the Internet, in a manual and/or automatic way; such actions being performed in an integrated or unified manner.

3. The integrated user interface of access to linear and non-linear multimedia content originating from multiple sources, according to claim 1, wherein it is structured in such a way as to provide the functions of at least: c) navigating through a single environment and/or list that aggregates digital TV channels and Internet channels using the keys "channel up" and "channel down" on the remote control, or the navigation arrows thereof, or any other type of mechanism used for changing the channel; d) watching content from digital TV channels in a linear manner; e) watching content from Internet channels in a linear (continuous) manner; f) watching content from Internet channels in a non-linear (on demand) manner; and optionally providing the following functionalities: g) bookmarking digital TV channels; and h) bookmarking channels with content from the Internet;

4. The integrated user interface of access to linear and non-linear multimedia content originating from multiple sources, according to claim 1, wherein it is structured in such a way as to provide the functions of at least: i) searching by content in channels with content from the Internet; j) filtering content through the choice of categories in channels with content from the Internet; l) see content related to the video that is playing at the time in channels with content from the Internet; m) remove digital TV channels when desired; n) removing channels with content from the Internet when desired.

5. The integrated user interface of access to linear and non-linear multimedia content originating from multiple sources, according to claim 1, wherein it is structured in such a way as to provide the set of functions defined in claims 2-4 or combinations thereof.

6. The integrated user interface of access to linear and non-linear multimedia content originating from multiple sources, according to claim 1, wherein it is embedded in the digital TV receiver memory (10), being called by the user through the remote control keys used to perform channel switching, so as to present a list (11) on a video background (12), said list (11) displaying icons that lead to TV channels (1, 2, 3, 4, 5, 6) followed by icons that lead to Internet channels (7, 8, 9) and/or by a "+ Channels" icon (13).

7. The integrated user interface of access to linear and non-linear multimedia content originating from multiple sources, according to claim 6, wherein said list (11) is of rotating type.

8. The integrated user interface of access to linear and non-linear multimedia content originating from multiple sources, according to any of claims 2-7, wherein it is operated from the remote control commonly used in digital TV reception apparatuses.

9. The integrated user interface of access to linear and non-linear multimedia content originating from multiple sources, according to claim 6, wherein, when selecting any of the icons (7-9) of an Internet channel, media is played in full screen (14), enabling the displaying of information such as the name of the channel of the video that is playing in a video area (15) and the content in a video area (16), in addition to accessing on demand content through the functions of access to related videos in a video area (17), selection of category in a video area (18) and search for content by keyword in a video area (19).

10. The integrated user interface of access to linear and non-linear multimedia content originating from multiple sources, according to claim 9, wherein said interface provides a function that allows the continuous loading of videos.

11. The integrated user interface of access to linear and non-linear multimedia content originating from multiple sources, according to any of claims 9-10, wherein it is operated from the remote control commonly used in digital TV reception apparatuses.

12. The integrated user interface of access to linear and non-linear multimedia content originating from multiple sources, according to any of previous claims, comprising the steps of:
(I) providing a digitally readable medium comprising lines of program code, which is stored in "read only" memory in the TV receiver and can be part of the TV receiver firmware, and
(II) provide means for performing such lines of program code in order to implement integrated access to linear and non-linear multimedia content originating from multiple sources in a digital TV reception apparatus with support to the playback of such multimedia content, the means of running being present in the digital TV receiver and comprising a processor and RAM memory; said means being accessed through the visual interface defined in claims 1-11.
